**Europäisches Patentamt**

**European Patent Office**

**Office européen des brevets**

(19)

(11) Numéro de publication : **0 011 003**
**B1**

(12)

# FASCICULE DE BREVET EUROPÉEN

(45) Date de publication du fascicule du brevet :
22.09.82

(51) Int. Cl.³ : **H 04 N   1/036, G 02 F   1/13**

(21) Numéro de dépôt : **79400715.3**

(22) Date de dépôt : **05.10.79**

(54) Télécopieur utilisant une cellule à cristal liquide.

(30) Priorité : **31.10.78 FR 7830852**

(43) Date de publication de la demande :
**14.05.80 (Bulletin 80/10)**

(45) Mention de la délivrance du brevet :
**22.09.82 Bulletin 82/38**

(84) Etats contractants désignés :
**DE GB IT NL SE**

(56) Documents cités :
**DE A 2 321 870**
**DE A 2 711 194**
**FR A 2 057 035**
**US A 3 930 119**
**US A 4 050 814**

**PROCEEDINGS OF THE SOCIETY FOR
INFORMATION DISPLAY, vol. 12, Quarter 4, 1971,
Los Angeles, US, TULTS : « A facsimile printer
utilizing an array of liquid crystal cells »**

(73) Titulaire : **THOMSON-CSF**
**173, Boulevard Haussmann**
**F-75360 Paris Cedex 08 (FR)**

(72) Inventeur : **Hareng, Michel**
**"THOMSON-CSF" - SCPI 173, bld Haussmann**
**F-75360 Paris Cedex 08 (FR)**
Inventeur : **Le Berre, Serge**
**"THOMSON-CSF" - SCPI 173, bld Haussmann**
**F-75360 Paris Cedex 08 (FR)**

(74) Mandataire : **Wang, Pierre et al**
**THOMSON-CSF SCPI 173, Bld Haussmann**
**F-75360 Paris Cedex 08 (FR)**

Imprimerie Jouve, 18, rue St-Denis, 75001 Paris, France

EP 0 011 003 B1

Télécopieur utilisant une cellule à cristal liquide

L'invention se rapporte à la reproduction d'images préalablement analysées et codées sous forme de signaux électriques correspondant aux points d'analyse et a plus particulièrement pour objet un télécopieur utilisant une cellule à cristal liquide nématique.

Plusieurs types de dispositifs de reproduction d'images utilisables, notamment, pour la télécopie existent actuellement. Leurs structures sont déterminées à partir de caractéristiques qui dépendent de leur domaine d'application. Pour des applications dans le domaine professionnel ou semi-professionnel, le nombre de documents à reproduire étant important, l'appareil utilisé peut être assez cher mais doit utiliser un papier normal ou un papier spécialisé peu cher. Au contraire pour des applications dans le domaine grand public, le nombre de documents à reproduire étant, à priori, assez faible, l'appareil utilisé doit être peu cher, même si il utilise un papier spécialisé plus cher.

La qualité de netteté et l'efficacité de l'inscription se heurtent au problème de la lenteur de commutation des dispositifs à cristaux liquides par rapport aux autres commutateurs optiques connus. En outre, le choix d'un défilement continu du papier sensible apporte une simplification, mais au détriment d'une inscription nette, car si la durée d'exposition est relativement grande un effet de filage se manifeste dans l'information reproduite.

Un télécopieur utilisant une barette de cellules à cristal liquide a été décrit dans le document DE-A-2 711 194, mais aucune indication n'est donnée sur la façon de porter remède aux inconvénients signalés ci-dessus. Le document DE-A-2 321 870 décrit un enregistreur de courbes à cristal liquide pour lequel les conditions d'exploitation peuvent être plus souples que celles imposées aux télécopieurs. L'article de J. Tults intitulé « a facsimile printer utilizing an array of liquid crystal cells » paru dans la revue « Proceedings of the society for information display », Vol. 12, Quarter 4, 1971, Los Angeles, US, décrit le comportement dynamique des cellules à cristal liquide, mais sans faire allusion au moyen de pallier les inconvénients sus-mentionnés.

La présente invention se rapporte au deuxième type d'appareils. Elle a pour objet un télécopieur du type comportant une source de lumière, des moyens assurant le défilement continu d'une bande de papier photosensible selon une direction déterminée, et un dispositif de projection formant à partir de la lumière émise par la source une ligne lumineuse, l'orientation de ladite ligne lumineuse par rapport à ladite direction étant choisie pour impressionner ligne par ligne ladite bande, un modulateur optique situé entre ladite source et ladite bande étant formé d'une cellule à cristal liquide nématique placée entre deux polariseurs, la cellule ayant une longueur au moins égale à la largeur de ladite ligne lumineuse, et comportant, sur ses parois internes, une électrode transparente gravée pour former N électrodes alignées dans la longueur de la cellule et une contre-électrode transparente, et un dispositif d'alimentation destiné à recevoir une suite de signaux électriques représentant les états des différents points d'une page analysée à reproduire et à appliquer, avec une fréquence de commande F et en parallèle entre la contre-électrode et les N électrodes, N signaux de commande correspondant aux N points d'une ligne d'impression, le modulateur ainsi constitué permettant la modulation de la ligne lumineuse suivant N points formant la ligne d'impression, caractérisé en ce que la source lumineuse est une source émettant une succession d'éclairs à ladite fréquence F ; la durée d'exposition d'une ligne étant déterminée par la durée de l'un desdits éclairs et étant inférieure au temps de défilement d'une ligne à la suivante ; un éclair étant émis juste avant la fin de chaque période desdits signaux de commande.

L'invention sera mieux comprise et d'autres caractéristiques apparaîtront à l'aide de la description qui suit en référence aux figures annexées.

La figure 1 représente un modulateur optique comportant une cellule à cristal liquide nématique utilisant les effets de biréfringence électriquement contrôlée, la figure 1a montrant cette cellule sans champ appliqué et la figure 1b cette même cellule sous champ appliqué.

La figure 2 représente un modulateur optique comportant une cellule à cristal liquide nématique torsadé, utilisant les effets de commutation par effet de champ, la figure 2a montrant cette cellule sans champ appliqué et la figure 2b, la même cellule sous champ appliqué.

La figure 3 est un schéma d'ensemble du dispositif de reproduction suivant l'invention.

La figure 4 représente schématiquement le modulateur optique utilisé dans le dispositif de reproduction d'images.

La figure 5 est une vue en coupe du dispositif représenté sur la figure 3 montrant le chemin optique du rayonnement impressionnant le papier.

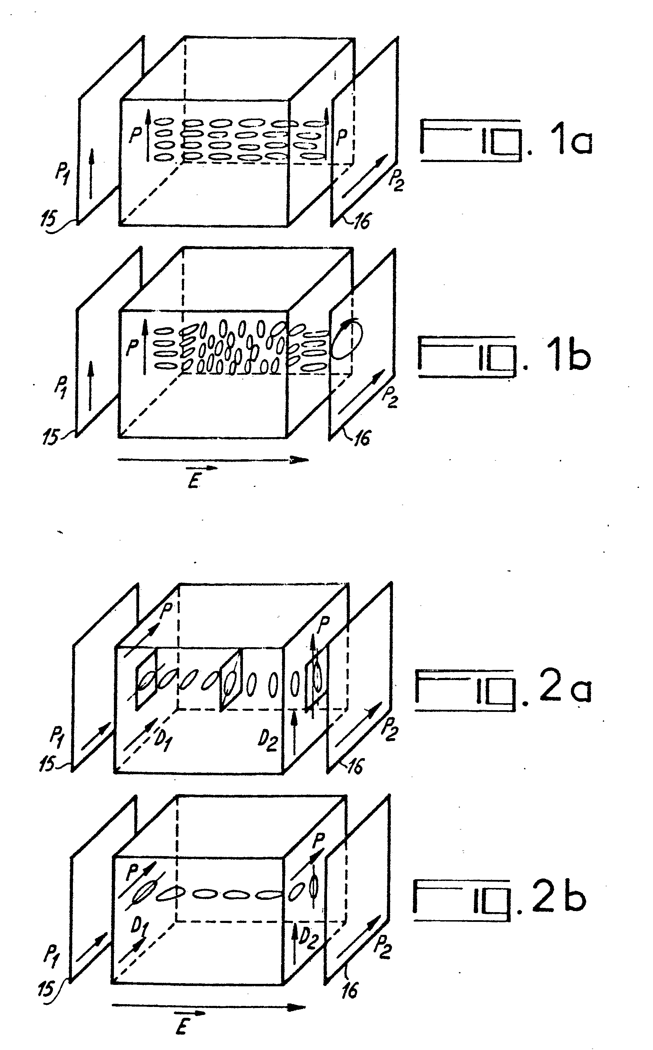

La cellule utilise un film mince (de l'ordre de 15 μ d'épaisseur) de cristal liquide nématique transparent en l'absence de champ électrique appliqué et fonctionne soit par biréfringence électriquement controlée, soit par commutation par effet de champ d'un film nématique torsadé. Ces deux modes de fonctionnement connus dans le domaine des cristaux liquides sont expliqués succinctement ci-dessous en référence aux figures 1 et 2 représentant respectivement une cellule fonctionnant par biréfringence électriquement contrôlée et une cellule fonctionnant au moyen d'un cristal liquide nématique torsadé.

Dans le premier cas, la cellule comporte un cristal liquide nématique à anisotropie diélectrique négative dont les molécules allongées sont orientées perpendiculairement aux parois de la cellule, au moyen d'un dopant approprié, en l'absence de champ (fig. 1a). Ces molécules basculent, en présence d'un champ électrique de façon que leur grand axe, et par suite l'axe optique du milieu, soit perpendiculaire au champ E appliqué (fig. 1b) sauf les molécules proches des parois qui restent perpendiculaires à ces parois. Le milieu se comporte donc, en l'absence de champ, comme un milieu isotrope uniaxe sans effet sur le rayonnement et lorsque cette cellule est placée entre deux polariseurs 15 et 16 croisés de directions $P_1$ et $P_2$, le rayonnement transmis est nul. En présence de champ, fourni par une source de tension alternative de fréquence comprise entre 3 et 5 KHz par exemple, les molécules ayant basculé, un rayonnement de polarisation P à l'entrée de la cellule (imposée par le polariseur 15) émerge de la cellule avec une polarisation elliptique qui a donc une composante suivant l'axe de polarisation $P_2$ du second polariseur 16. En conséquence, au moins une partie du rayonnement incident émerge du second polariseur, en présence de champ. L'intensité du rayonnement transmis est fonction de la tension appliquée. De plus la réponse d'une cellule de ce type est fortement colorée, certaines composantes du spectre étant éteintes, pour une valeur de tension donnée, lorsque la cellule est éclairée en lumière blanche sous incidence quasi normale. Cette coloration n'empêche pas l'impression d'un papier photosensible disposé derrière la cellule. De plus il est possible de placer entre la cellule et le papier photosensible, un filtre sélectionnant une longueur d'onde transmise sous champ appliqué pour laquelle le papier a une bonne sensibilité.

Le cristal peut également être à anisotropie diélectrique positive. Dans ce cas les molécules sont ancrées parallèlement aux parois et basculent sous l'effet d'un champ appliqué pour s'orienter perpendiculairement aux parois. Une telle cellule placée entre deux polariseurs croisés, le premier polariseur ayant un axe parallèle à la direction d'ancrage, permet d'obtenir une extinction du rayonnement en l'absence de champ et une transmission au moins partielle du rayonnement en présence de champ.

Dans le cas d'une cellule à cristal liquide utilisant un nématique torsadé (fig. 2), le cristal liquide est un cristal à anisotropie diélectrique positive, dont les molécules basculent sous champ appliqué E de manière que leur grand axe soit parallèle au champ appliqué. Pour qu'il y ait effectivement basculement il faut donc qu'en l'absence de champ appliqué les molécules soient orientées parallèlement aux parois. De plus pour que l'effet de commutation de polarisation soit obtenu, par l'effet de la structure torsadée, les molécules du cristal liquide sont ancrées aux parois, par frottis ou au moyen d'un surfactant, suivant deux directions orthogonales $D_1$ et $D_2$ (fig. 2a). L'arrangement régulier des molécules est ainsi réalisé suivant une structure en hélice. Le guidage par cette hélice d'une onde de polarisation linéaire $P_1$ parallèle à la direction d'ancrage $D_1$ se traduit par un entraînement du plan de polarisation, suivant l'hélice, et les deux directions d'ancrage étant orthogonales, la rotation de polarisation en absence de champ est égale à $\pi/2$. Par contre lorsqu'un champ est appliqué entre les électrodes, les molécules basculent pour s'orienter dans le sens du champ, sauf celles qui sont proches des parois. Par conséquent, l'activité optique du film nématique disparaît et donc son pouvoir rotatoire et le rayonnement est transmis par la cellule sans rotation de polarisation, comme dans un milieu isotrope uniaxe. Si les deux polariseurs sont orientés dans la même direction $P_1$ parallèle à $D_1$, le rayonnement transmis par le second en l'absence de champ est nul puisque la polarisation a tourné de $\pi/2$ en traversant le film nématique. Par contre, en présence de champ appliqué, les molécules ayant basculé dans le sens du champ, l'axe optique est perpendiculaire aux électrodes et la transmission est maximum.

Le modulateur optique utilisé dans le télécopieur suivant l'invention utilise une cellule à cristal liquide nématique fonctionnant suivant l'un ou l'autre des deux modes sus-mentionnés, l'ancrage des molécules aux parois de la cellule étant effectué par frottis ou avec un surfactant approprié, ou au moyen d'un dopant additionné au cristal liquide de manière à obtenir la configuration souhaitée. Les polariseurs sont orientés convenablement par rapport à la cellule, c'est-à-dire croisés pour une cellule fonctionnant par biréfringence électriquement contrôlée et parallèles pour une cellule à cristal liquide nématique torsadé.

Le dispositif optique de reproduction d'images suivant l'invention fonctionne avec une impression ligne par ligne. Le document à copier est analysé en un certain nombre de lignes formées de points, par exemple en 1 200 lignes de N = 1 700 points chacune pour une page de hauteur H = 29 cm et de largeur L = 21 cm. Les points ainsi analysés sont transmis sous forme d'éléments binaires série (pour une impression en noir et blanc) et peuvent être regroupés par un convertisseur série parallèle par groupes de N points formant une ligne.

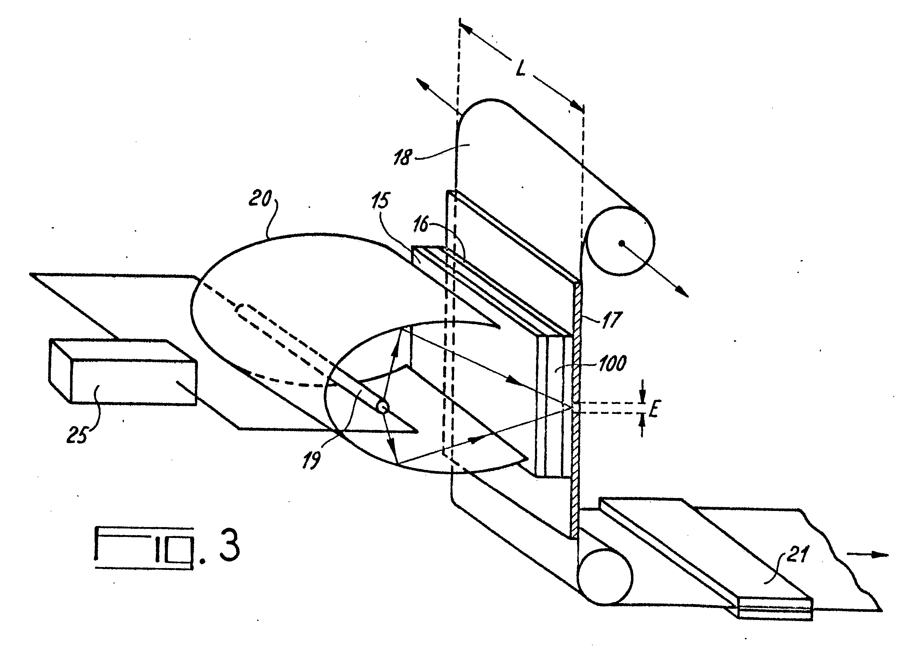

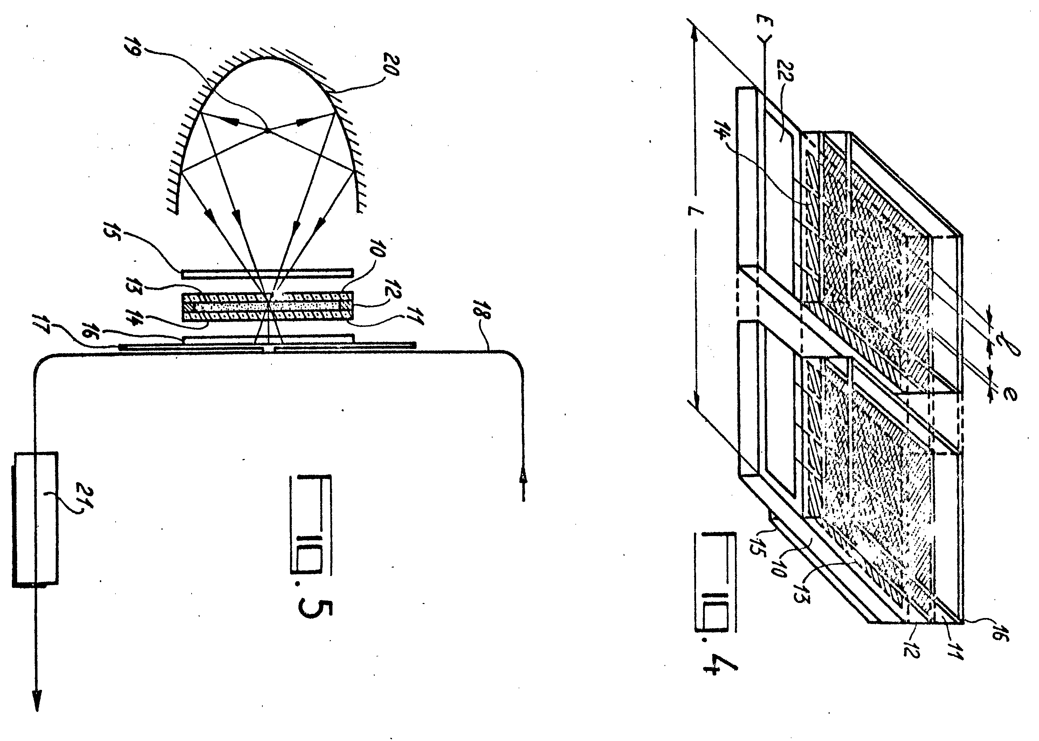

Ce dispositif représenté schématiquement sur la figure 3 comporte une cellule à cristal liquide 100 de longueur égale à la largeur du papier à impressionner, formant un modulateur optique pour une ligne lumineuse de longueur égale à la largeur du papier. Pour cela la cellule 100 représentée plus en détails sur les figures 4 et 5 comporte deux substrats de verre 10 et 11 maintenus à distance l'un de l'autre par un joint 12 d'épaisseur constante (15 µm par exemple) formant avec les substrats 10 et 11 une cavité dans laquelle est placé un cristal liquide nématique. Les faces internes à la cellule des substrats de verre 10 et 11 sont respectivement munies d'une contre-électrode transparente 13 et d'une électrode gravée pour former N électrodes transparentes indépendantes telles que 14, ces électrodes ayant une largeur 1 et étant espacées de e.

A titre d'exemple, pour N = 1 700 points, la largeur 1 des électrodes peut être égale à 100 μm et leur espacement e égal à 25 μm. Sur le substrat portant les N électrodes, il est possible d'intégrer les connexions nécessaires à leur alimentation ainsi qu'un convertisseur série parallèle (ou plusieurs convertisseurs) destiné à recevoir sur une entrée une suite de signaux à distribuer sur les différentes électrodes. Pour cela, le substrat portant les électrodes, 10, a des dimensions supérieures à celles nécessaires pour la cellule à cristal liquide et sur la partie qui ne forme pas paroi pour cette cellule, on intègre le (ou les) convertisseur série parallèle 22 par les techniques utilisées pour la fabrication des transistors sur films minces sur substrat semiconducteur amorphe ou cristallin.

Cette cellule est placée entre deux polariseurs 15 et 16, qui peuvent être réalisés sous forme de films minces (10 μm) et collés sur les deux faces externes de la cellule.

Un cache 17, comportant une fente de longueur L et de largeur E, respectivement égales à la longueur et à la largeur d'une ligne d'analyse est placé contre le second polariseur. Le papier photosensible, 18, défile derrière ce cache 17.

La source de lumière est une lampe 19 dont la longueur est supérieure ou égale à L, émettant des éclairs de lumière blanche, alimentée par un dispositif 25. Cette lampe peut avoir une puissance de l'ordre de 20 W, une telle puissance permettant l'impression d'un papier photosensible du type « Dry Silver » par un éclair de 1 ms lorsque la lumière émise est concentrée sur la ligne à impressionner. Du fait de la constante de temps du cristal liquide nématique nécessaire pour que, lors d'un changement de tension appliquée, les molécules basculent (de l'ordre de 100 ms) le rythme de la lampe peut être de 10 éclairs par seconde. Ce rythme et la durée d'exposition (1 ms) permettent, sans inconvénient, un défilement continu du papier à une vitesse égale à 2,5 mm/s, la largeur E d'une ligne étant égale à 250 μm. Pour que le modulateur optique ainsi réalisé fonctionne de manière satisfaisante, les éclairs doivent se produire lorsque le cristal liquide a atteint un état stable, c'est-à-dire juste avant le basculement de la tension de commande appliquée entre la contre-électrode et les électrodes.

Pour assurer une concentration du rayonnement émis par la lampe sur le papier, le dispositif optique de reproduction d'images comporte un miroir 20 ayant une section droite elliptique. La lampe 19 est placée suivant une première ligne focale de ce miroir et la fente du cache 17 suivant la deuxième ligne focale de ce miroir à section elliptique. Ainsi le rayonnement émis par la lampe est concentré vers la fente du cache 17 et donc sur le papier qui défile derrière ce cache. De plus, du fait de la forme elliptique, la dimension du grand axe de l'ellipse étant choisie très supérieure à celle du petit axe (ellipse assez plate) le rayonnement reçu par la cellule est un rayonnement distribué dans une faible ouverture assimilable à un rayonnement pseudo-parallèle. Cette faible ouverture est nécessaire pour que le modulateur à cristal liquide fonctionne de manière correcte du fait que l'axe optique du cristal liquide a une direction orthogonale aux parois de la cellule dans l'un des deux états et que l'action du cristal liquide sur le rayonnement dépend directement de la direction de propagation du rayonnement.

Le papier photosensible impressionné par la lumière est ensuite développé dans un four 21 où la révélation a lieu à sec et à chaud pour les papiers du type « Dry Silver ». Tout autre papier photosensible dont les caractéristiques sont compatibles avec l'utilisation du dispositif de reproduction précédemment décrit peut également être utilisé.

Dans le mode de réalisation du dispositif optique de reproduction d'images décrit ci-dessus les N électrodes alignées sur la longueur de la cellule à cristal liquide ont été supposées formées sur un substrat isolant. Une telle structure conduit à un effet de trame verticale dû à l'espacement entre les électrodes. En effet, même si un certain nombre de points consécutifs sont dans le même état, et correspondent à l'inscription d'un élément continu de la ligne, la lumière n'est pas transmise par la cellule dans les espaces de largeur e entre les différents points. Pour diminuer cet effet de trame verticale, il est possible de former les électrodes sur un substrat transparent semi-isolant et non plus isolant du type Saphir ou Corindon polycristallin. Ainsi entre deux électrodes consécutives, le substrat sera porté à un potentiel intermédiaire qui permettra de diminuer le contraste entre les points inscrits et les espacements lorsque ces points sont dans le même état d'éclairement.

L'invention n'est pas limitée au mode de réalisation précisément décrit et représenté. En particulier la lampe utilisée dans le dispositif optique a été décrite comme étant une lampe émettant de manière discontinue, par exemple suivant un rythme de 10 éclairs par seconde. Il est également possible d'utiliser une lampe à émission continue, le modulateur optique ne recevant la lumière que pendant les intervalles de temps de 1 ms précédemment définis à travers un obturateur commandé mécaniquement.

De plus le dispositif optique décrit pour former une ligne lumineuse au moyen d'un faisceau de faible ouverture sur le modulateur optique et le papier photosensible a été décrit comme comportant un miroir ayant une section elliptique. Cette structure n'est pas limitative et tout dispositif optique permettant de concentrer le rayonnement en une ligne lumineuse par un faisceau peu ouvert peut également être utilisé.

Enfin en ce qui concerne les formats respectifs du document analysé et du papier à impressionner, il a été supposé que ces formats étaient les mêmes et que les dimensions d'un point analysé sur le document à reproduire et d'un point à impressionner étaient égales. En pratique, il est possible d'effectuer une réduction ou un agrandissement de la page à reproduire (en conservant la même disposition) en formant un nombre de points sur la page photosensible égal au nombre de points d'analyse sur une ligne de page analysée, la largeur du papier photosensible étant différente de la largeur de la page analysée. Enfin il est possible d'adjoindre au dispositif de reproduction d'images précédemment décrit, un dispositif de traitement des signaux résultant de l'analyse pour modifier la mise en page du document reproduit par rapport au document analysé transmis sous forme de signaux au télécopieur.

## Revendications

1. Télécopieur, du type comprenant une source de lumière (19), des moyens assurant le défilement continu d'une bande de papier photosensible (18) selon une direction déterminée, et un dispositif de projection (20) forment à partir de la lumière émise par la source une ligne lumineuse, l'orientation de ladite ligne lumineuse par rapport à ladite direction étant choisie pour impressionner ligne par ligne ladite bande, un modulateur optique situé entre ladite source et ladite bande étant formé d'une cellule à cristal liquide nématique (100) placée entre deux polariseurs (15-16), la cellule ayant une longueur au moins égale à la largeur de ladite ligne lumineuse, et comportant, sur ses parois internes, une électrode transparente (14) gravée pour former N électrodes alignées dans la longueur de la cellule et une contre-électrode transparente (13), et un dispositif d'alimentation (22) destiné à recevoir une suite de signaux électriques représentant les états des différents points d'une page analysée à reproduire et à appliquer, avec une fréquence de commande F et en parallèle entre la contre-électrode et les N électrodes, N signaux de commande correspondant aux N points d'une ligne d'impression, le modulateur ainsi constitué permettant la modulation de la ligne lumineuse suivant N points formant la ligne d'impression, caractérisé en ce que la source lumineuse est une source émettant une succession d'éclairs à ladite fréquence F ; la durée d'exposition d'une ligne étant déterminée par la durée de l'un desdits éclairs et étant inférieure au temps de défilement d'une ligne à la suivante ; un éclair étant émis juste avant la fin de chaque période desdits signaux de commande.

2. Télécopieur selon la revendication 1, caractérisé en ce que le cristal liquide contenu dans la cellule fonctionne par biréfringence électriquement contrôlée, les molécules étant ancrées aux parois suivant une direction orthogonale à la direction d'orientation des molécules sous champ appliqué, les deux polarisations étant orientées suivant des directions orthogonales.

3. Télécopieur selon la revendication 1, caractérisé en ce que le cristal liquide contenu dans la cellule est à anisotropie diélectrique positive, les molécules étant ancrées parallèlement aux parois en l'absence de tension appliquée, et basculant orthogonalement au champ électrique sous tension appliquée, les directions d'ancrage sur les deux parois étant orthogonales de telle manière que le cristal ait une structure en hélice, les deux polariseurs étant orientés suivant des directions parallèles.

4. Télécopieur selon l'une quelconque des revendications 1 à 3, caractérisé en ce que la source de lumière est une source linéaire, le dispositif de projection comportant un miroir (20) ayant une section droite elliptique, le miroir, la source et le papier étant disposés de telle manière que dans un plan de section, la source est située suivant l'une des lignes focales du miroir à section elliptique, l'autre ligne focale dudit miroir étant confondue avec la surface du papier.

5. Télécopieur selon la revendication 4, caractérisé en ce qu'un cache (17) comportant une fente de largeur égale à la hauteur d'une ligne d'impression est placé entre le modulateur optique et le papier photosensible pour limiter la zone du papier impressionnée.

6. Télécopieur selon la revendication 5, caractérisé en ce que l'électrode gravée sur une paroi de la cellule pour former N électrodes alignées est formée sur un substrat semi-isolant.

7. Télécopieur selon la revendication 6, caractérisé en ce que les polariseurs sont des films minces collés sur les faces externes de la cellule à cristal liquide nématique.

8. Télécopieur selon la revendication 7, caractérisé en ce que le dispositif d'alimentation comporte au moins un convertisseur série-parallèle intégré sur le substrat portant N électrodes, les liaisons électriques entre les sorties du convertisseur et les N électrodes étant également intégrées sur le même substrat.

## Claims

1. Telecopier of the type comprising a light source (19), means assuring the continuous feed of a photosensitive paper strip (18) in a determined direction, and a projection device (20) forming a luminous line from the light emitted by the source, the orientation of said luminous line with respect to said direction being selected for imprinting line by line of said strip, an optical modulator situated between said source and said strip being formed of a nematic liquid crystal cell (100) placed between two polarizers (15-16), the cell having a length at least equal to the width of said luminous line, and having a transparent electrode (14) engraved to form N electrodes aligned in the length of the cell and a transparent opposite electrode (13) on its inner walls, and a supply device (22) adapted to receive an electric signal sequence representing the states of the different points of an analyzed page to be reproduced, and to apply N control signals corresponding to N points of a printing line at a control frequency F and in parallel between the opposite electrode and the N electrodes, the thus formed modulator permitting the modulation of the luminous line along N points forming the printing line, characterized in that the luminous source is a source emitting a succession of flashes at said frequency F ; the exposure duration of one line being determined by the duration of one of said flashes and being less than the feeding time from one line to the next ; a flash being emitted just prior to the end of each period of said control signals.

2. Telecopier in accordance with claim 1, characterized in that the liquid crystal contained in the cell operates by electrically controlled birefringence, the molecules being anchored to the walls in a direction perpendicular to the orientation direction of the molecules under an applied field, the two polarizations being oriented along perpendicular directions.

3. Telecopier in accordance with claim 1, characterized in that the liquid crystal contained in the cell is of positive dielectric anisotropy, the molecules being anchored parallel to the walls when no voltage is applied and pivoting perpendicular to the electric field when a voltage is applied, the anchoring directions on the two walls being perpendicular so that the crystal has an helical structure, the two polarizers being oriented along parallel directions.

4. Telecopier in accordance with any of claims 1 to 3, characterized in that the light source is a linear source, the projection device comprising a mirror (20) having an elliptic cross-section, the mirror, the source and the paper being arranged in such a manner that, in a sectional plane, the source lies along one of the focal lines of the mirror having elliptic section H, the other focal lines of said mirror falling into the surface of the paper.

5. Telecopier in accordance with claim 4, characterized in that a mask (17) comprising a slot of a width equal to the height of a printing line is placed between the optical modulator and the photosensitive paper to limit the imprinted paper zone.

6. Telecopier in accordance with claim 5, characterized in that the electrode engraved on one wall of the cell to form N aligned electrodes is formed on a semi-insulating substrate.

7. Telecopier in accordance with claim 6, characterized in that the polarizers are thin films bonded on the outer faces of the nematic liquid crystal cell.

8. Telecopier in accordance with claim 7, characterized in that the supply device comprises at least one serial-parallel converter integrated on the substrate carrying N electrodes, the electric connections between the outputs of the converter and the N electrodes being also integrated on the same substrate.

**Ansprüche**

1. Fernkopierer vom Typ mit einer Lichtquelle (19), Mitteln, die den kontinuierlichen Durchlauf eines photoempfindlichen Papierstreifens (18) in einer bestimmten Richtung gewährleisten, mit einer Projektionsvorrichtung (20), die aus dem von der Quelle ausgesandten Licht eine Lichtzeile bildet, wobei die Orientierung dieser Lichtzeile in bezug auf die genannte Richtung so gewählt ist, um den Streifen zeilenweise zu bedrukken, wobei ein optischer Modulator zwischen der Quelle und dem Streifen angeordnet und aus einer nematischen Flüssigkristallzelle (100) gebildet ist, die zwischen zwei Polarisatoren (15-16) angeordnet ist, wobei die Zelle eine Länge aufweist, die wenigstens gleich der Breite der genannten Lichtzeile ist, und auf ihren Innenwandungen eine lichtdurchlässige, zur Bildung von N in Längsrichtung der Zelle ausgerichteten Elektroden gravierte Elektrode (14) und eine lichtdurchlässige Gegenelektrode (13) aufweist, und mit einer Speisevorrichtung (22), die dazu bestimmt ist, eine Folge von elektrischen Signalen zu empfangen, welche die Zustände der verschiedenen Punkte einer analysierten zu reproduzierenden Seite darstellen, und mit einer Steuerfrequenz F und parallel zwischen der Gegenelektrode und den N Elektroden N Steuersignale anzulegen, die den N Punkten einer Druckzeile entsprechen, wobei der so gebildete Modulator die Modulation der Lichtzeile entlang N Punkten, welche die Druckzeile bilden, ermöglicht, dadurch gekennzeichnet, daß die Lichtquelle eine Quelle ist, die eine Aufeinanderfolge von Lichtblitzen mit der genannten Frequenz F aussendet ; wobei die Belichtungsdauer einer Zeile durch die Dauer eines der Blitze bestimmt wird und geringer ist als die Durchlaufzeit von einer Zeile zur nächsten ; wobei ein Blitz unmittelbar vor dem Ende jeder Periode der Steuersignale ausgesandt wird.

2. Fernkopierer nach Anspruch 1, dadurch gekennzeichnet, daß der in der Zelle enthaltene Flüssigkristall mit elektrisch gesteuerter Doppelbrechung arbeitet, wobei die Moleküle an den Wandungen in einer Richtung senkrecht zur Orientierung der Moleküle bei angelegtem Feld verankert sind und wobei die beiden Polarisationen in aufeinander senkrechten Richtungen orientiert sind.

3. Fernkopierer nach Anspruch 1, dadurch gekennzeichnet, daß der in der Zelle enthaltene Flüssigkristall positive dielektrische Anisotropie aufweist, wobei die Moleküle parallel zu den Wandungen verankert sind, wenn keine Spannung angelegt ist, und bei angelegter Spannung senkrecht zum elektrischen Feld verschwenkt werden und wobei die Verankerungsrichtungen an den beiden Wandungen aufeinander senkrecht sind, so daß der Kristall eine schraubenförmige Struktur aufweist, wobei die beiden Polarisatoren in zueinander parallelen Richtungen orientiert sind.

4. Fernkopierer nach einem der Ansprüche 1 bis 3, dadurch gekennzeichnet, daß die Lichtquelle eine linienförmige Quelle ist, wobei die Projektionsvorrichtung einen Spiegel (20) umfaßt, dessen senkrechter Querschnitt elliptisch ist, wobei der Spiegel, die Quelle und das Papier so angeordnet sind, daß in einer Schnittebene die Quelle entlang einer der Brennlinien des Spiegels mit elliptischem Querschnitt H liegt, während die andere Brennlinie des Spiegels mit der Papieroberfläche zusammenfällt.

5. Fernkopierer nach Anspruch 4, dadurch gekennzeichnet, daß eine Maske (17) mit einem Schlitz, dessen Breite gleich der Höhe einer Druckzeile ist, zwischen dem optischen Modulator und dem photoempfindlichen Papier angeordnet ist, um die bedruckte Papierzone zu begrensen.

6. Fernkopierer nach Anspruch 5, dadurch gekennzeichnet, daß die zur Bildung von N ausgerichteten Elektroden gravierte Elektrode auf einer Wandung der Zelle auf einem halbisolierenden Substrat gebildet ist.

7. Fernkopierer nach Anspruch 6, dadurch gekennzeichnet, daß die Polarisatoren Dünnschichten sind, die an den Außenseiten der nematischen Flüssigkristallzelle kleben.

8. Fernkopierer nach Anspruch 7, dadurch gekennzeichnet, daß die Speisevorrichtung wenigstens einen Seriell/Parallel-Umsetzer umfaßt, der auf dem die N Elektroden tragenden Substrat integriert ist, wobei die elektrischen Verbindungen zwischen den Ausgängen des Umsetzers und den N Elektroden ebenfalls auf demselben Substrat integriert sind.

FIG. 1a

FIG. 1b

FIG. 2a

FIG. 2b

FIG. 3

Fig.4

Fig.5

3